# EUROPÄISCHE PATENTSCHRIFT

(11) **EP 3 458 341 B1**
(45) Veröffentlichungstag und Bekanntmachung des Hinweises auf die Patenterteilung: **09.12.2020**
(21) Anmeldenummer: 16751152.6
(22) Anmeldetag: 20.05.2016
(51) Int. Cl.: B62D 53/12

(54) **SATTELKUPPLUNG UND KUPPLUNGSVERFAHREN DAFÜR**
FIFTH-WHEEL COUPLING AND COUPLING METHOD THEREFOR
SELLETTE D'ATTELAGE ET PROCÉDÉ D'ACCOUPLEMENT ASSOCIÉ

(43) Veröffentlichungstag der Anmeldung: 27.03.2019
(73) Patentinhaber: Hamburger Patent Schmiede GmbH, 21244 Buchholz (DE)
(72) Erfinder: METTERNICH, Heinz-Rüdiger, 21279 Eversen-Heide (DE)
(74) Vertreter: Hansen, Jochen
(86) Internationale Anmeldenummer: PCT/DE2016/100233
(87) Internationale Veröffentlichungsnummer: WO 2017/198242

(56) Entgegenhaltungen:
- EP-A1- 1 655 212
- EP-A1- 2 899 101
- EP-A2- 1 240 067
- DE-A1-102006 020 069

## Beschreibung

Die Erfindung betrifft eine Sattelkupplung für die lösbare Kupplung einer Sattelzugmaschine mit einem Sattelanhänger, mit einer Sattelplatte an der Sattelzugmaschine, mit einem am Sattelanhänger angeordneten, mit der Sattelplatte in Eingriff bringbaren Königszapfen, der mit einer koaxial zur Königszapfenachse ausgerichteten Innenbohrung versehen ist, und mit einer elektrischen und pneumatischen Steckkupplung zur lösbaren Verbindung von elektrischen und pneumatischen Leitungen zwischen Sattelzugmaschine und Sattelanhänger, wobei die Steckkupplung einen ersten Steckkupplungsteil an der Sattelplatte und einen zweiten Steckkupplungsteil in der Innenbohrung des Königszapfens aufweist, die rotationssymmetrisch ausgebildet, ineinander steckbar und um die Königszapfenachse zueinander verdrehbar sind, und der erste Steckkupplungsteil an der Sattelplatte mittels Hubeinrichtung von einer entkuppelten, rückgezogenen Ruheposition in eine in das zweite Steckkupplungsteil gekuppelte, hervorstehende Kuppelposition verschiebbar angeordnet ist.

Ferner betrifft die Erfindung ein Verfahren zum Kuppeln einer Sattelkupplung bestehend aus einer Sattelplatte an einer Sattelzugmaschine und einem Königszapfen an einem Sattelanhänger, bei dem der Königszapfen mit der Sattelplatte in Eingriff gebracht wird und elektrische und pneumatische Leitungen mittels einer Steckkupplung verbunden werden, wobei die Steckkupplung einen ersten Steckkupplungsteil an der Sattelplatte und einen zweiten Steckkupplungsteil in einer koaxial zur Königszapfenachse ausgerichteten Innenbohrung des Königszapfens aufweist, die rotationssymmetrisch ausgebildet, ineinander steckbar und um die Königszapfenachse zueinander verdrehbar sind, und der erste Steckkupplungsteil an der Sattelplatte von einer entkuppelten, rückgezogenen Ruheposition in eine in das zweite Steckkupplungsteil gekuppelte, hervorstehende Kuppelposition beim Kuppeln verschoben wird.

Sattelkupplungen, die ein selbsttätiges Kuppeln auch der Versorgungsleitungen gestatten, sind in unterschiedlicher Ausgestaltung bekannt. Beispielsweise beschreibt die EP 0 816 211 A2 eine Kupplung mit einer Steckverbindung, die in einer Innenbohrung des Königzapfens untergebracht ist, bei der sich jedoch die an der Sattelplatte angebrachte Steckmuffe bei den Schwenkbewegungen des Sattelanhängers mitbewegt und folglich beim Kuppeln auch hinsichtlich seiner Rotationsstellung ausgerichtet sein muss.

Andere teils mechanisch sehr aufwendige Konstruktionen für eine derartige Sattelkupplung sind aus der US 3,181,887, der US 3,428,334 sowie der EP 0 058 075 A1 bekannt.

Die EP 1 655 212 A1 beschreibt eine Sattelkupplung für die lösbare Kupplung einer Sattelzugmaschine mit einem Sattelanhänger mit einer Sattelplatte an der Sattelzugmaschine und einem Königszapfen am Sattelanhänger, bei dem ein um ein Schwenkarm bewegbarer Verbindungsmechanismus vorgesehen ist, der einen Anschlussblock unterhalb der Sattelplatte trägt. Der Anschlussblock kann mit dem Königszapfen derart zusammenwirken, dass elektrische, pneumatische und/oder hydraulische Verbindungen zwischen Sattelzugmaschine und Sattelanhänger bewirkt werden.

In der EP 1 240 067 B1 ist dann eine für den täglichen Einsatz praktikable Lösung einer Sattelkupplung entwickelt worden. Diese Kupplung weist die oben genannten Merkmale auf. Ferner wurde eine weitere Entwicklung hinsichtlich einer zweipoligen elektrischen Verbindung in der DE 20 2007 014 589 U beschrieben. Nachteilig an diesen Sattelkupplungen ist, dass beim Einkuppeln teils die Zentierung der zueinander zusammenzusteckenden Steckerteile nicht gegeben ist und daher Fehler beim Kuppelvorgang entstehen. Ferner entsteht beim Kuppelvorgang und auch im gekuppelten Zustand zusätzlicher Verschleiß an der Steckkupplung durch unerwünschte Relativbewegungen zwischen den Steckerteilen.

Ausgehend von der EP 1 240 067 B1 ist es Aufgabe der Erfindung, den Kupplungsvorgang noch zuverlässiger zu gestalten und den Verschleiß an der Steckverbindung zu reduzieren.

Gelöst wird diese Aufgabe mit einer Sattelkupplung gemäß Anspruch 1 und einem Verfahren zum Kuppeln dieser Sattelkupplung gemäß Anspruch 7.

Dadurch, dass an der Hubeinrichtung eine Zentriereinheit vorgesehen ist, die die relative Lage des ersten Steckkupplungsteils in Ruheposition zentriert, wobei nach dem Kuppelvorgang in Kuppelposition des ersten Steckkupplungsteils im zweiten Steckkupplungsteil die Zentrierung freigegeben ist, wobei die Zentriereinheit Leitfedern aufweist, die den ersten Steckkupplungsteil in seiner Lage in Kuppelposition stützen, und für die Zentrierung an der Zentriereinheit zwei kegelförmige Zentrierdorne vorgesehen sind, die in zugeordnete Zentrierbohrungen in Ruheposition des ersten Steckkupplungsteils eingreifen, ist das verschiebbar an der Sattelplatte angeordnete erste Steckkupplungsteil an der Sattelzugmaschine so zentriert, dass beim mechanischen Einkuppeln des Königszapfens in der Sattelplatte ein einwandfreies Zusammenstecken mittels der Hubeinrichtung ermöglicht wird. Dabei wird jedoch unmittelbar beim Kuppelvorgang, nämlich beim Verschieben des ersten Steckkupplungsteils mit der Hubeinrichtung zum Einkuppeln in den zweiten Steckkupplungsteil die Zentrierung freigegeben, um kleine Ausgleichsbewegungen zu zulassen. Mit den Leitfedern wird die mittlere Zentrallage des ersten Steckkupplungsteils durch die Kraft der dort angeordneten Federn gehalten. Bei Fehlausrichtungen oder Relativbewegungen zwischen Sattelplatte und Königszapfen, insbesondere geringfügige Winkelabweichungen, verstellt sich der erste Steckkupplungsteil entgegen der Kraft der Federn - quasi schwimmend - in seine optimale Lage. Gleichwohl verhindern die Federn ein beliebiges Dezentrieren des ersten Steckkupplungsteils, insbesondere beim Kuppelvorgang, kurz bevor die beiden Steckkupplungsteile miteinander in Verbindung gelangen. Nach dem Ankuppeln des Sattelanhängers an der Sattelzugmaschine kann sich der erste Steckkupplungsteil aufgrund der freigegebenen Zentierung bei etwaigen kleinen Fehlausrichtungen zwischen der Sattelplatte und dem Königszapfen des Sattelanhängers beim Einsteckvorgang zum sicheren Einführen leicht seitlich bewegen. Nach dem Kuppeln wird eine unerwünschte Relativbewegung zwischen den beiden Steckkupplungsteilen verhindert und somit der Verschleiß minimiert.

Demgegenüber wird durch die Zentrierung (Festlegung) des ersten Steckkupplungsteils in seiner Ruheposition verhindert, dass sich aufgrund von allgemeinen Erschütterungen und insbesondere den Erschütterungen beim Kuppelvorgang, nämlich dem Unterfahren der Sattelzugmaschine mit seiner Sattelplatte unter den Sattelanhänger, eine Fehlausrichtung des ersten Steckkupplungsteils gegenüber dem zweiten Steckkupplungsteils einstellt. Mit den Zentrierdornen wird eine relativ einfach gestaltete Zentierungsmöglichkeit gegeben. Die kegelförmigen Zentrierdorne erlauben ein hochpräzises Zurückkehren in die zentrierte x- und y-Position. Bei starken Erschütterungen wird vermieden, dass sich das erste Steckkupplungsteil unerwünscht verstellt.

Verfahrensgemäß wird die Aufgabe durch die nachfolgenden Schritte gelöst: zentriert Halten des ersten Steckkupplungsteils in der entkuppelten, rückgezogenen Ruheposition und Freigeben der Zentrierung des ersten Steckkupplungsteils beim Verschieben des ersten Steckkupplungsteils in die gekuppelte, hervorstehende Kuppelposition, wobei der erste Steckkupplungsteil in der gekuppelten, hervorstehenden Kuppelposition schwimmend gehaltert wird, wobei eine dem ersten Steckkupplungsteil zugeordnete Anlagefläche gegen die Unterseite des Königszapfens federnd gepresst wird. Damit kann sich der erste Steckkupplungsteil beim Einstecken in den zweiten Steckkupplungsteil hinsichtlich kleiner Fehlausrichtungen anpassen. Ferner können im zusammengekuppelten Zustand darin Relativbewegungen zwischen den beiden Steckkupplungsteilen vermieden werden, da sich im Betrieb auftretende, leichte Verkippungen zwischen Sattelplatte und Königszapfen nicht auf die Steckkupplung übertragen. Diese Maßnahmen führen zur Vermeidung von Fehlern im Kupplungsvorgang und zur Reduzierung des Verschleißes.

Wenn die Zentriereinheit Verstellmittel zur genauen Ausrichtung der relativen Lage des ersten Steckkupplungsteils in x- und y-Richtung aufweist, wobei die Königszapfenachse die z-Richtung definiert, kann die Relativlage des ersten Steckkupplungsteils in Bezug auf die Innenbohrung des Königszapfens bzw. des zweiten Steckkupplungsteils innerhalb dieser Innenbohrung ein- und nachgestellt werden. Die Verstellmittel sind beispielsweise Langlöcher in x- und y-Richtung bzw. gleichartige Justierelemente. Mit diesen Verstellmitteln an der Zentiereinheit können somit kleinste Abweichungen in der Geometrie der Sattelplatte, der Kupplungsposition für den Königszapfen und dergleichen ausgeglichen werden. Diese Justierung kann auf einem gesonderten Montagetisch vor der Endmontage der entsprechenden Sattelplatte auf der Sattelzugmaschine durchgeführt werden.

Wenn die Hubeinrichtung zusammen mit der Zentriereinheit gegen eine Belastung durch Federn an der Sattelplatte schwimmend gelagert ist, wobei an der Hubeinrichtung mit Zentriereinheit eine Auflaufschräge vorgesehen ist, die beim Kuppelvorgang mit der Unterseite des Königszapfens so zusammenwirkt, dass die Hubeinrichtung mit Zentriereinheit gegen die Federbelastung niedergedrückt wird, wird ein federbelasteter Presssitz des in der Hubeinrichtung vorgesehenen Anschlages gegen die Unterseite des Königszapfens des gekuppelten Sattelaufliegers erreicht. Dabei kann die Auflagefläche beispielsweise als Hubtasse ausgebildet werden, in der der erste Steckkupplungsteil von der Hubeinrichtung in seiner Hubbewegung geführt wird. Wenn die Hubeinrichtung einen Antrieb, beispielsweise einen Pneumatikzylinder zur Hubbetätigung aufweist, der nach Verriegelung des Königszapfens in der Sattelplatte angesteuert bzw. ausgelöst wird, wird das Zusammenstecken der beiden Steckkupplungsteile nach erfolgter mechanischer Verbindung der Sattelkupplung ausgeführt. Neben einer pneumatischen Betätigung ist selbstverständlich auch ein hydraulischer oder elektrischer Antrieb der Hubeinrichtung möglich.

Dadurch, dass die Hubeinrichtung eine Hubtasse mit einer Öffnung aufweist, wobei der erste Steckkupplungsteil in der Hubtasse von der rückgezogenen Ruheposition in die in das zweite Steckkupplungsteil gekuppelte, durch die Öffnung hervorstehende Kuppelposition verschiebbar ist, wird der an der Hubeinrichtung verschiebbar angeordnete, erste Steckkupplungsteil innerhalb der Hubtasse in seiner rückgezogenen Ruheposition geschützt gehalten. Erst beim Kuppelvorgang wird durch die Hubbetätigung der erste Steckkupplungsteil nach oben durch die Öffnung der Hubtasse in den dort zwischenzeitlich positionierten Königszapfen und somit in den zweiten Steckkupplungsteil eingekuppelt, also in die vorstehende Kuppelposition verschoben.

Um auch zu vermeiden, dass Schmutz, Niederschläge oder dergleichen in die Öffnung der Hubtasse und damit in den ersten Steckkupplungsteil eindringen können, ist die Öffnung mit einer oder zwei schwenkbaren Abdeckelementen in Abdeckposition abgedeckt, wobei sich die Abdeckelemente federbelastet in der Abdeckposition befinden und beim Kuppelvorgang vom Königszapfen gegen die Federkraft geöffnet werden. Somit wird der nach oben offene erste Steckkupplungsteil innerhalb der Sattelkupplung vor Verschmutzungen und übermäßigen Feuchtigkeitseintrag geschützt, sodass die elektrischen Kontakte sauber bleiben und Schmutzeintrag in das Pneumatiksystem weitgehend vermieden wird.

Entsprechend wird verfahrensgemäß der Kuppelvorgang dadurch ausgezeichnet, dass der erste Steckkupplungsteil in der gekuppelten, hervorstehenden Kuppelposition schwimmend gehaltert wird, wobei eine dem ersten Steckkupplungsteil zugeordnete Anlagefläche gegen die Unterseite des Königszapfens federnd gepresst wird. Die zugeordnete Anlagefläche kann als Hubtasse ausgebildet werden. An dieser Hubtasse kann dann zur Erreichung der Federvorspannung eine Auflaufschräge für die Unterseite des Königszapfens in Bewegungsrichtung des Kuppelvorgangs vorgesehen werden, sodass beim Kuppelvorgang zunächst die Unterseite des Königszapfens mit einer Auflaufschräge der dem ersten Steckkupplungsteil zugeordneten Anlagefläche in Berührung gelangt und beim weiteren Unterfahren der Sattelzugmaschine unter den Sattelanhänger die Federvorspannung und damit der Anpressdruck der Anlagefläche gegen die Unterseite des Königszapfens aufgebaut wird.

Nach der mechanischen Umschließung des Königszapfens in bekannter Weise (mechanischer Kupplungsvorgang) wird dann der Pneumatikzylinder für die Betätigung der Hubeinrichtung aktiviert, sodass dann der erste Steckkupplungsteil in die gekuppelte, hervorstehende Kuppelposition verschoben und somit die elektrischen und pneumatischen Leitungen zwischen Sattelzugmaschine und Sattelanhänger verbunden werden.

Wenn eine Öffnung für das Durchführen des verschiebbaren ersten Steckkupplungsteils im nicht gekuppelten Zustand mit einem Abdeckelement abgedeckt wird, wobei beim Kuppelvorgang vom Königszapfen das Abdeckelement gegen eine Federkraft geöffnet wird, wird eine mechanisch einfache Lösung zur Abdeckung der nach oben offenen Öffnung innerhalb der Sattelplatte erreicht, sodass das darin befindliche erste Steckkupplungsteil vor Schmutz und Witterungseinflüssen weitgehend geschützt ist. Beim Kuppelvorgang rutscht die Unterseite des Königszapfens entlang der Auflaufschräge und öffnet unmittelbar vor Erreichen der Kuppelposition das Abdeckelement, sodass ein optimaler Schutz der elektrischen und/oder pneumatischen Kontakte gegeben ist.

Nachfolgend wird ein Ausführungsbeispiel der Erfindung anhand der beiliegenden Zeichnungen detailiert beschrieben.

Darin zeigt:
- Fig. 1: eine Sattelkupplung in teils geschnittener Darstellung mit teils vergrößerten Einzelbauteilen im Zustand vor dem Ankuppeln,
- Fig. 2: die Situation in Fig. 1 beim Kupplungsvorgang,
- Fig. 3: die Situation in Fig. 2 unmittelbar nach dem mechanischen Ankuppeln und
- Fig. 4: die Situation in Fig. 3 nach Beendigung des vollständigen Kuppelvorgangs.

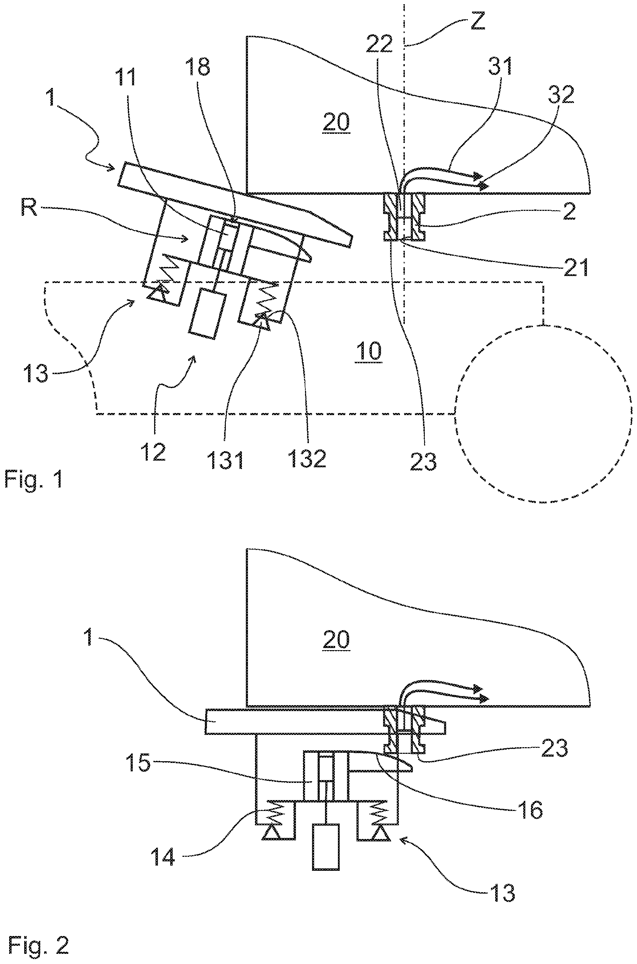

Fig. 1 zeigt eine Sattelkupplung für die lösbare Kupplung einer Sattelzugmaschine 10, die lediglich mit gestrichelter Linie angedeutet ist, mit einem Sattelanhänger 20, von dem lediglich der Bugbereich dargestellt ist. In Fig. 1 ist der Zustand der Sattelkupplung vor dem Ankuppeln schematisiert, teils geschnitten und teils mit vergrößert wiedergegebenen Bauteilen dargestellt. Die Sattelkupplung weist eine Sattelplatte 1 auf der Sattelzugmaschine 10 und einen Königszapfen 2 im Bugbereich des Sattelanhängers 20 auf.

Zur Einleitung des Kupplungsvorganges fährt die Sattelzugmaschine 10 rückwärts mit ihrer Sattelplatte 1 unter den Sattelanhänger 20. In Fig. 1 ist der Zustand dargestellt, bei dem gerade die Sattelplatte 1 mit dem Sattelanhänger 20 in Berührung gelangt. Die Sattelplatte 1 ist um eine horizontale und senkrecht zur Fahrtrichtung der Sattelzugmaschine ausgerichtete Achse schwenkbar, sodass sie beim Unterfahren des Sattelanhängers 20 sich in die in Fig. 2 dargestellte im Wesentlichen horizontale Ausrichtung schwenkt.

Der Sattelplatte 1 ist eine Hubeinrichtung 12 zugeordnet, die über eine Zentiereinheit 13 mit der Sattelplatte 1 verbunden ist. Dabei weist die Hubeinrichtung 12 eine Hubtasse 15 (siehe beispielsweise Bezugszeichenzuodnung in Fig. 2) mit einer Öffnung 18 auf, in der ein erster Steckkupplungsteil 11 verschiebbar über einen Antrieb, hier Pneumatikzylinder 17 angeordnet ist. An der Hubtasse 15 der Hubeinrichtung 12 ist eine Auflaufschräge 16 angeordnet, die mit der Unterseite 23 des Königszapfens 2 beim Kupplungsvorgang zusammenwirkt. Die Verbindung zwischen der Sattelplatte 1 und der Hubeinrichtung 12 erfolgt über Federn 14, die eine "schwimmende" Lagerung unter Anpressdruck gegen die Unterseite 23 des Königszapfens 2 erlaubt.

Ferner ist an dieser Verbindung zwischen Sattelplatte 1 und Hubeinrichtung 12 eine Zentiereinheit 13 angeordnet, die in der in Fig. 1 dargestellten Ruhestellung R im ungekuppelten Zustand den ersten Steckkupplungsteil 11 über zwei Zentrierdorne 131, die in zugeordnete Zentierbohrungen 132 eingreifen, in seiner x-und y-Lage fixiert. Mit nicht dargestellten Verstellmitteln kann die genaue relative Lage des ersten Steckkupplungsteils 11 zum Königszapfen 2 justiert werden. Geeignete Verstellmittel sind beispielsweise Langlöcher mit Feststellschrauben oder ähnlich geeignete Justiermittel.

Am Sattelanhänger 20 ist der Königszapfen 2 mit seiner Königszapfenachse Z vertikal angeordnet. Der Königszapfen 2 weist eine koaxial zur Königszapfenachse Z ausgeführte Innenbohrung 21 auf, in der ein zweites Steckkupplungsteil 22 sitzt. Das zweite Steckkupplungsteil 22 ist passend zum ersten Steckkupplungsteil 11 gestaltet und bildet zusammen eine Steckkupplung für die elektrische und pneumatische Verbindung zwischen Sattelzugmaschine 10 und Sattelanhänger 20. Entsprechend sind an dem zweiten Steckkupplungsteil 22 pneumatische Leitungen 31 und elektrische Leitungen 32 angeschlossen. Bevorzugt handelt es sich um zwei pneumatische Leitungen für die Bremsanlage und um zwei elektrische Leitungen, die die elekrische Versorgung des Sattelanhängers 20 gewährleisten und über einen gleichzeitig aufgeschaltetes digitales Signal entsprechend einem Can-Bus die Steuer-und Schaltsignale für unterschiedliche Verbraucher dem Sattelanhänger 20 zur Verfügung stellen. Dazu ist eine entsprechende Auswertelektronik an der elektrischen Leitung 32 vorzusehen, die hier nicht näher dargestellt ist.

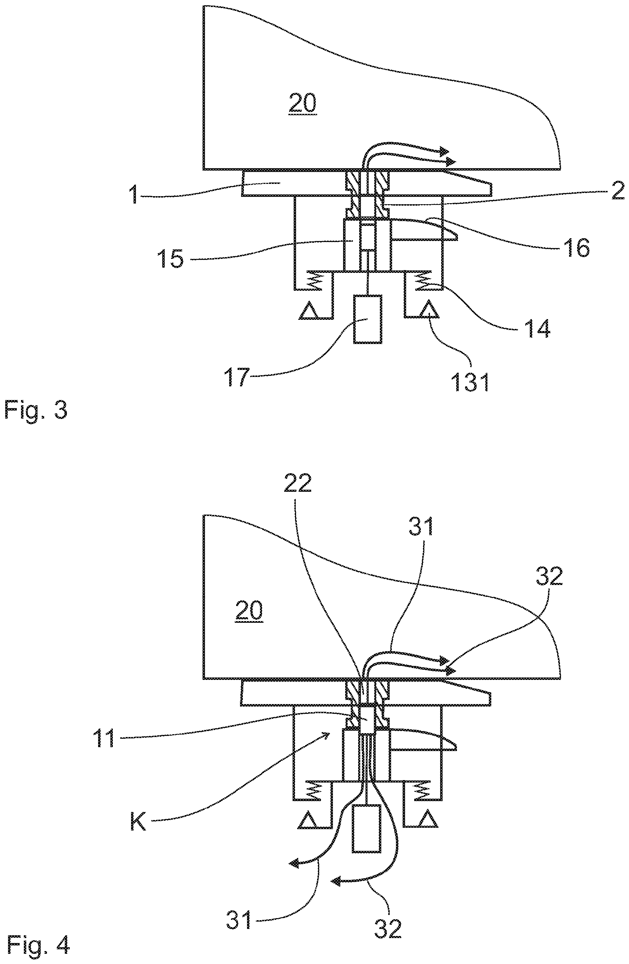

Auf der Seite der Sattelzugmaschine 10 sind am ersten Steckkupplungsteil 11 selbstverständlich die entsprechenden pneumatischen Leitungen 31 und elektrischen Leitungen 32 angeschlossen, wie in Fig. 4 dargestellt. Der Übersichtlichkeit halber wurden diese Leitungen in den Fig. 1 bis 3 fortgelassen.

Nachfolgend wird der Kupplungsvorgang anhand der weiteren Fig. 2 bis 4 beschrieben. In den Fig. 2 bis 4 ist der Übersichtlichkeit halber die Sattelzugmaschine 10 nicht mehr dargestellt. Die Position der Sattelplatte 1 relativ zur Position des Sattelanhängers 20 macht aber den Kupplungsvorgang und die Position der Sattelzugmaschine 10 deutlich.

In Fig. 2 ist die Sattelzugmaschine durch weitere Rückwärtsfahrt gegenüber Fig. 1 soweit unter dem Sattelanhänger 20 gefahren, dass sich die Sattelplatte 1 parallel zum Unterboden des Sattelanhängers 20 ausgerichtet hat (horizontale Ausrichtung). Der Königszapfen 2 ist dabei gerade zwischen die beiden Schenkel der U-förmigen Sattelplatte 1 aufgenommen und gelangt mit der schwimmend gelagerten Hubeinrichtung 12, nämlich der Auflaufschräge 16 mit der Unterseite 23 des Königszapfens 2 in Berührung. Beim weiteren Rückwärtsfahren der Sattelzugmaschine wird durch Auflaufen der Auflaufschräge 16 an der Unterseite 23 des Königszapfens 2 die gesamte Hubeinrichtung 12 gegen die Kraft der Federn 14 nach unten gedrückt.

Dabei entfernen sich die Zentierdornen 131 aus dem Eingriff in deren zugeordneten Zentrierbohrungen 132 der Zentiereinheit 13, sodass sich die Hubeinrichtung und somit der erste Steckkuppungsteil 11 lateral (in x-und y-Richtung) leicht verschieben könnte.

Beim weiteren Rückwärtsfahren der Sattelzugmaschine 10 in Bewegungsdarstellung zwischen Fig. 2 und Fig. 3 wird dann durch den Königszapfen 2 eine die Öffnung 18 abdeckende, in den Fig. 1 bis 4 nicht dargestellte Abdeckeinrichtung durch den Königszapfen 2 von der Abdeckposition in eine geöffnete Position verschoben. Die Abdeckeinrichung besteht beispielsweise aus zwei Abdeckelementen, die die Öffnung 18 in einer federbelasteten Ruhestellung überdecken und die Öffnung 18 und somit den ersten Steckkupplungsteil 11, der sich unterhalb der Öffnung 18 befindet, vor Verschmutzung schützen. Beim Ankuppeln wird dabei durch die Bewegung (Rückwärtsfahrt) des Königszapfens 2 relativ zur Sattelplatte 1 die Abdeckeinrichung bestehend aus zwei Abdeckelementen gleitend an den Seitenflächen des Königszapfens 2 gegen die Federkraft geöffnet.

In Fig. 3 ist die Sattelzugmaschine 10 soweit rückwärts unter den Sattelanhänger 20 gefahren, dass der Königszapfen 2 im Zentrum der Sattelplatte 1 positioniert ist und der mechanische Ankupplungsvorgang in bekannter Weise ausgelöst wurde. Damit ist der Sattelanhänger 20 mechanisch fest mit der Sattelzugmaschine 10 verbunden.

Bei den letzten Zentimetern der Rückwärtsfahrt bis zum Zustand gemäß Fig. 3 rutschte die Unterseite 23 des Königszapfens 2 entlang der Auflaufschräge 16 bis zur Hubtasse 15, die als Anlagefläche zur Unterseite 23 des Königszapfens 2 dient. Dabei ist nun die gesamte Hubeinrichtung 12 mit Hubtasse 15, Auflaufschräge 16 und dem Pneumatikzylinder 17 um circa 15 Milimeter gegen die Kraft der Federn 14 niedergedrückt worden. Die Kraft der Federn 14 bewirken einen Anpressdruck gegen die Unterseite 23 des Königszapfen 2, sodass bei entsprechend richtiger lateraler Ausrichtung in x-und y-Richtung ein vollständiges Fluchten der Hubbewegung der Hubeinrichtung mit der Königszapfenachse Z gewährleistet ist.

Da außerdem die Zentiereinheit 13 in Form der Zentierdornen 131 in Zentrierbohrungen 132 nun entkoppelt ist, liegt die Hubeinrichtung 12 mit ihrer als Anlagefläche dienenden Hubtasse 15 quasi schwimmend, aber unter erheblicher Federvorbelastung an der Unterseite 23 des Königszapfen 2 an. Etwaige Kipp- oder Neigebewegungen zwischen dem Sattelanhänger 20 und der Sattelplatte 1, die im praktischen Fahrbetrieb tatsächlich auftreten können, stören somit nicht die perfekte Ausrichtung der Hubeinrichtung 12 und somit des ersten Steckkupplungsteils 11 relativ zum Königszapfen 2 bzw. dem in der Innenbohrung 21 untergebrachten zweiten Steckkupplungsteils 22.

In dieser Situation wird nun über ein entsprechendes Ventil der Pneumatikzylinder 17 mit Druckluft beaufschlagt, sodass das erste Steckkupplungsteil 11 in Richtung der Königszapfenachse Z von seiner Ruheposition R in die Kuppelposition K verschoben wird. Dabei verstellt sich das erste Steckkupplungsteil 11 von der in Fig. 3 dargestellten Position (ebenso wie in den Fig. 1 und 2) in die in Fig. 4 dargestellte Position. Dabei wird die Steckkupplung zur Übertragung der elektrischen Signale und zum Anschluss der pneumatischen Leitungen geschlossen.

Dieser Zustand in der Kuppelposition K ist in Fig. 4 dargestellt. Somit sind nun die pneumatischen Leitungen 31 und die elektrischen Leitungen 32 miteinander verbunden. Der aus Sattelanhänger 20 und Sattelzugmaschine 10 bestehende Sattelzug kann somit gebremst und sämtliche elektrischen Geräte im Sattelanhänger 20 versorgt werden.

Darüber hinaus ist anzumerken, dass in der Kuppelposition K die schwimmende Lagerung über Federn 14 der Hubeinrichtung 12 mit Hubtasse 15 und dem darin geführten ersten Steckkupplungsteil 11 unter Anpressdruck gegen die Unterseite 23 des Königszapfen 2 gehalten wird, sodass stets eine koaxiale Ausrichtung zur Königszapfenachse Z sowohl des ersten, wie auch des zweiten Steckkupplungsteils 11, 22 gewährleistet sind, auch wenn der Sattelanhänger 20 geringfügige Kipp-oder Neigungsdifferenzen zur Sattelplatte 1 haben sollte.

Damit können beim Kuppelvorgang über die unmittelbar vor dem Kupplungsvorgang gegebene Freigabe in eine schwimmende Lagerung der Hubeinrichtung 12 kleine Fehlausrichtungen ausgeglichen werden, was die Zuverlässigkeit des Kupplungsvorgangs erhöht. Ferner wird der Verschleiß an der Steckkupplung (Steckverbindung) innerhalb des Königszapfen 2 reduziert, da der erste Steckkupplungsteil 11 stets koaxial zum zweiten Steckkupplungsteil 22 ausgerichtet ist, unabhängig von etwaigen geringen Relativbewegungen (Kipp-oder Neigungsbewegungen) zwischen Sattelplatte 1 und Sattelanhänger 20.

Zum Lösen der Kupplung werden die Arbeitsschritte beim Ankuppeln in umgekehrter Reihenfolge ausgeführt. Zunächst wird der erste Steckkupplungsteil 11 aus der Kuppelposition K in die Ruheposition R verschoben und anschließend die Verriegelung der bekannten Sattelkupplung gelöst. Die Sattelzugmaschine 10 kann nun nach Abstützung des Sattelanhängers 20 unter diesem herausfahren.

### Bezugszeichenliste

- 1: Sattelplatte
- 10: Sattelzugmaschine
- 11: erstes Steckkupplungsteil
- 12: Hubeinrichtung
- 13: Zentiereinheit
- 131: Zentierdorn
- 132: Zentrierbohrung
- 14: Feder
- 15: Hubtasse
- 16: Auflaufschräge
- 17: Antrieb, Pneumatikzylinder
- 18: Öffnung

- 2: Königszapfen
- 20: Sattelanhänger
- 21: Innenbohrung
- 22: zweites Steckkupplungsteil
- 23: Unterseite

- 31: pneumatische Leitung
- 32: elektrische Leitung

- K: Kuppelposition
- R: Ruheposition
- Z: Königszapfenachse

## Patentansprüche

1. Sattelkupplung für die lösbare Kupplung einer Sattelzugmaschine (10) mit einem Sattelanhänger (20), mit einer Sattelplatte (1) an der Sattelzugmaschine (10), mit einem am Sattelanhänger (20) angeordneten, mit der Sattelplatte (1) in Eingriff bringbaren Königszapfen (2), der mit einer koaxial zur Königszapfenachse (Z) ausgerichteten Innenbohrung (21) versehen ist, und mit einer elektrischen und pneumatischen Steckkupplung zur lösbaren Verbindung von elektrischen und pneumatischen Leitungen (32, 31) zwischen Sattelzugmaschine (10) und Sattelanhänger (20), wobei
- die Steckkupplung einen ersten Steckkupplungsteil (11) an der Sattelplatte (1) und einen zweiten Steckkupplungsteil (22) in der Innenbohrung (21) des Königszapfens (2) aufweist, die rotationssymmetrisch ausgebildet, ineinander steckbar und um die Königszapfenachse (Z) zueinander verdrehbar sind, und
- der erste Steckkupplungsteil (11) an der Sattelplatte (1) mittels Hubeinrichtung (12) von einer entkuppelten, rückgezogenen Ruheposition (R) in eine in das zweite Steckkupplungsteil (22) gekuppelte, hervorstehende Kuppelposition (K) verschiebbar angeordnet ist,
**dadurch gekennzeichnet, dass** an der Hubeinrichtung (12) eine Zentriereinheit (13) vorgesehen ist, die die relative Lage des ersten Steckkupplungsteils (11) in Ruheposition (R) zentriert, wobei nach dem Kuppelvorgang in Kuppelposition (K) des ersten Steckkupplungsteils (11) im zweiten Steckkupplungsteil (22) die Zentrierung freigegeben ist, wobei die Zentriereinheit (13) Leitfedern aufweist, die den ersten Steckkupplungsteil (11) in seiner Lage in Kuppelposition (K) stützen, und für die Zentrierung an der Zentriereinheit (13) zwei kegelförmige Zentrierdorne (131) vorgesehen sind, die in zugeordnete Zentrierbohrungen (132) in Ruheposition (R) des ersten Steckkupplungsteils (11) eingreifen.

2. Sattelkupplung nach Anspruch 1, **dadurch gekennzeichnet, dass** die Zentriereinheit (13) Verstellmittel zur genauen Ausrichtung der relativen Lage des ersten Steckkupplungsteils (11) in x- und y-Richtung aufweist, wobei die Königszapfenachse (Z) die z-Richtung definiert.

3. Sattelkupplung nach einem der vorangehenden Ansprüche, **dadurch gekennzeichnet, dass** die Hubeinrichtung (12) zusammen mit der Zentriereinheit (13) gegen eine Belastung durch Federn (14) an der Sattelplatte (1) schwimmend gelagert ist, wobei an der Hubeinrichtung (12) mit Zentriereinheit (13) eine Auflaufschräge (16) vorgesehen ist, die beim Kuppelvorgang mit der Unterseite (23) des Königszapfens (2) so zusammenwirkt, dass die Hubeinrichtung (12) mit Zentriereinheit (13) gegen die Federbelastung niedergedrückt wird.

4. Sattelkupplung nach einem der vorangehenden Ansprüche, **dadurch gekennzeichnet, dass** die Hubeinrichtung (12) einen Antrieb (17) zur Hubbetätigung aufweist, der nach Verriegelung des Königszapfens (2) in der Sattelplatte (1) angesteuert wird.

5. Sattelkupplung nach einem der vorangehenden Ansprüche, **dadurch gekennzeichnet, dass** die Hubeinrichtung (12) eine Hubtasse (15) mit einer Öffnung (18) aufweist, wobei der erste Steckkupplungsteil (11) in der Hubtasse (15) von der rückgezogenen Ruheposition (R) in die in das zweite Steckkupplungsteil (22) gekuppelte, durch die Öffnung (18) hervorstehende Kuppelposition (K) verschiebbar ist.

6. Sattelkupplung nach Anspruch 5, **dadurch gekennzeichnet, dass** die Öffnung (18) mit einer oder zwei schwenkbaren Abdeckelementen in Abdeckposition abgedeckt ist, wobei sich die Abdeckelemente federbelastet in der Abdeckposition befinden und beim Kuppelvorgang vom Königszapfen gegen die Federkraft geöffnet werden.

7. Verfahren zum Kuppeln einer Sattelkupplung bestehend aus einer Sattelplatte (1) an einer Sattelzugmaschine (10) und einem Königszapfen (2) an einem Sattelanhänger (20), bei dem der Königszapfen (2) mit der Sattelplatte (1) in Eingriff gebracht wird und elektrische und pneumatische Leitungen (31, 32) mittels einer Steckkupplung verbunden werden, wobei die Steckkupplung einen ersten Steckkupplungsteil (11) an der Sattelplatte (1) und einen zweiten Steckkupplungsteil (22) in einer koaxial zur Königszapfenachse (Z) ausgerichteten Innenbohrung (21) des Königszapfens (2) aufweist, die rotationssymmetrisch ausgebildet, ineinander steckbar und um die Königszapfenachse (Z) zueinander verdrehbar sind, und der erste Steckkupplungsteil (11) an der Sattelplatte (1) von einer entkuppelten, rückgezogenen Ruheposition (R) in eine in das zweite Steckkupplungsteil (22) gekuppelte, hervorstehende Kuppelposition (K) beim Kuppeln verschoben wird, **gekennzeichnet durch** die Schritte
- zentriert Halten des ersten Steckkupplungsteils (11) in der entkuppelten, rückgezogenen Ruheposition (R),
- Freigeben der Zentrierung des ersten Steckkupplungsteils (11) beim Verschieben des ersten Steckkupplungsteils (11) in die gekuppelte, hervorstehende Kuppelposition (K),
wobei der erste Steckkupplungsteil (11) in der gekuppelten, hervorstehenden Kuppelposition (K) schwimmend gehaltert wird, wobei eine dem ersten Steckkupplungsteil (11) zugeordnete Anlagefläche gegen die Unterseite (23) des Königszapfens (2) federnd gepresst wird.

8. Verfahren nach Anspruch 7, **dadurch gekennzeichnet, dass** beim Kuppelvorgang zunächst die Unterseite (23) des Königszapfens (2) mit einer Auflaufschräge (16) der dem ersten Steckkupplungsteil (11) zugeordneten Anlagefläche in Berührung gelangt und beim weiteren Unterfahren der Sattelzugmaschine (10) unter den Sattelanhänger (20) die Federvorspannung und damit der Anpressdruck der Anlagefläche gegen die Unterseite (23) des Königszapfens (2) aufgebaut wird.

9. Verfahren nach Anspruch 8, **dadurch gekennzeichnet, dass** nach dem mechanischen Verriegeln des Königszapfens (2) in der Sattelplatte (1) der erste Steckkupplungsteil (11) in die gekuppelte, hervorstehende Kuppelposition verschoben und somit die elektrischen und pneumatischen Leitungen (31, 32) zwischen Sattelzugmaschine (10) und Sattelanhänger (20) verbunden werden.

10. Verfahren nach Anspruch 9, **dadurch gekennzeichnet, dass** beim Kuppelvorgang nach Feststellen der mechanischen Verriegelung des Königszapfens (2) in der Sattelplatte (1) das Verschieben des ersten Steckkupplungsteils (11) in die gekuppelte, hervorstehende Kuppelposition (K) ausgelöst wird.

11. Verfahren nach Anspruch 7, 8, 9 oder 10, **dadurch gekennzeichnet, dass** eine Öffnung (18) für das Durchführen des verschiebbaren ersten Steckkupplungsteils (11) im nicht gekuppelten Zustand mit einem Abdeckelement abgedeckt wird, wobei beim Kuppelvorgang vom Königszapfen (2) das Abdeckelement gegen eine Federkraft geöffnet wird.

## Claims

1. A fifth-wheel coupling for the releasable coupling of a semitrailer towing vehicle (10) with a semitrailer (20), having a fifth wheel (1) at the semitrailer towing vehicle (10), having a kingpin (2), arranged at the semitrailer (20) and able to be brought into engagement with the fifth wheel (1), which is provided with an inner bore (21) oriented coaxially with the kingpin axis (Z), and having an electrical and pneumatic plug-in coupling for the releasable connection of electrical and pneumatic lines (32, 31) between semitrailer towing vehicle (10) and semitrailer (20), wherein
- the plug-in coupling has a first plug-in coupling part (11) at the fifth wheel (1) and a second plug-in coupling part (22) in the inner bore (21) of the kingpin (2), which are rotationally-symmetrical, can be plugged into one another and can be twisted with respect to one another about the kingpin axis (Z), and
- the first plug-in coupling part (11) is arranged at the fifth wheel (1) in a manner displaceable by means of a lifting device (12) from an uncoupled, retracted rest position (R) into a projecting coupling position (K) in which it is coupled into the second plug-in coupling part (22),
**characterised in that** a centring unit (13) is provided at the lifting device (12) and centres the relative position of the first plug-in coupling part (11) in rest position (R), wherein the centring is released after the coupling procedure in coupling position (K) of the first plug-in coupling part (11) in the second plug-in coupling part (22), wherein the centring unit (13) has guide springs which support the first plug-in coupling part (11) in its position in coupling position (K), and two cone-shaped centring pins (131) are provided at the centring unit (13) for the centring and engage associated centring bores (132) in rest position (K) of the first plug-in coupling part (11).

2. A fifth-wheel coupling according to claim 1, **characterised in that** the centring unit (13) has adjustment means for exact orientation of the relative position of the first plug-in coupling part (11) in x- and y-direction, wherein the kingpin axis (Z) defines the z-direction.

3. A fifth-wheel coupling according to any one of the preceding claims, **characterised in that** the lifting device (12) together with the centring unit (13) is floatingly mounted at the fifth wheel (1) against a loading by springs (14), wherein a run-up slope (16) is provided at the lifting device (12) with centring unit (13), which run-up slope (16) co-operates during the coupling procedure with the underside (23) of the kingpin (2) in such a manner that the lifting device (12) with centring unit (13) is pressed down against the spring loading.

4. A fifth-wheel coupling according to any one of the preceding claims, **characterised in that** the lifting device (12) has a drive (17) to actuate lifting, which drive (17) is activated after locking of the kingpin (2) in the fifth wheel (1).

5. A fifth-wheel coupling according to any one of the preceding claims, **characterised in that** the lifting device (12) has a lifting cup (15) with an opening (18), wherein the first plug-in coupling part (11) is displaceable in the lifting cup (15) from the retracted rest position (R) into the coupling position (K) in which it is coupled into the second plug-in coupling part (22) and projects through the opening (18).

6. A fifth-wheel coupling according to claim 5, **characterised in that** the opening (18) is covered by one or two pivotable cover elements in the cover position, wherein the cover elements are spring-loaded in the cover position and during the coupling procedure are opened against the spring force by the kingpin.

7. A method of coupling a fifth-wheel coupling consisting of a fifth wheel (1) at a semitrailer towing vehicle (10) and a kingpin (2) at a semitrailer (20), in which the kingpin (2) is brought into engagement with the fifth wheel (1) and electrical and pneumatic lines (31, 32) are connected by means of a plug-in coupling, wherein the plug-in coupling has a first plug-in coupling part (11) at the fifth wheel (1) and a second plug-in coupling part (22) in an inner bore (21), oriented coaxially with the kingpin axis (Z), of the kingpin (2), which are rotationally-symmetrical, can be plugged into one another and can be twisted with respect to one another about the kingpin axis (Z), and the first plug-in coupling part (11) at the fifth wheel (1) is displaced upon coupling from an uncoupled, retracted rest position (R) into a projecting coupling position (K) in which it is coupled into the second plug-in coupling part (22), **characterised by** the steps
- centred holding of the first plug-in coupling part (11) in the uncoupled, retracted rest position (R),
- release of the centring of the first plug-in coupling part (11) upon displacement of the first plug-in coupling part (11) into the coupled, projecting coupling position (K),
wherein the first plug-in coupling part (11) is floatingly held in the coupled, projecting coupling position (K),
wherein a contact surface associated with the first plug-in coupling part (11) is pressed against the underside (23) of the kingpin (2) in a resilient manner.

8. A method according to claim 7, **characterised in that** during the coupling procedure, first of all the underside (23) of the kingpin (2) comes into contact with a run-up slope (16) of the contact surface associated with the first plug-in coupling part (11) and, upon further travel of the semitrailer towing vehicle (10) under the semitrailer (20), the spring pre-tensioning and thereby the contact pressure of the contact surface against the underside (23) of the kingpin (2) is built up.

9. A method according to claim 8, **characterised in that** after the mechanical locking of the kingpin (2) in the fifth wheel (1), the first plug-in coupling part (11) is displaced into the coupled, projecting coupling position and consequently the electrical and pneumatic lines (31, 32) between semitrailer towing vehicle (10) and semitrailer (20) are connected.

10. A method according to claim 9, **characterised in that** during the coupling procedure, the displacement of the first plug-in coupling part (11) into the coupled, projecting coupling position (K) is triggered after the mechanical locking of the kingpin (2) in the fifth wheel (1) has been ascertained.

11. A method according to claim 7, 8, 9 or 10, **characterised in that** an opening (18) for the passage of the displaceable, first plug-in coupling part (11) is covered by a cover part in the non-coupled state, wherein the cover element is opened against a spring force by the kingpin (2) during the coupling procedure.

## Revendications

1. Accouplement par sellette pour l'accouplement détachable d'un tracteur routier (10) à une semi-remorque (20), avec une sellette (1) sur le tracteur routier (10), avec un pivot d'attelage (2) disposé sur la semi-remorque (20) et pouvant être mis en prise avec la sellette (1) et qui est pourvu d'un alésage intérieur (21) orienté de façon coaxiale à l'axe (Z) du pivot d'attelage, et avec un accouplement enfichable électrique et pneumatique pour le raccordement détachable de conduites électriques et pneumatiques (32, 31) entre le tracteur routier (10) et la semi-remorque (20),
- l'accouplement enfichable étant muni d'une première pièce d'accouplement enfichable (11) sur la sellette (1) et d'une deuxième pièce d'accouplement enfichable (22) dans l'alésage intérieur (21) du pivot d'attelage (2), lesquelles sont conçues avec une symétrie de rotation, peuvent être enfichées l'une dans l'autre et peuvent tourner l'une par rapport à l'autre autour de l'axe (Z) du pivot d'attelage, et
- la première pièce d'accouplement enfichable (11) étant disposée sur la sellette (1) en pouvant être déplacée au moyen d'un dispositif de levage (12) d'une position de repos (R) désaccouplée et rétractée à une position d'accouplement (K) saillante et accouplée dans la deuxième pièce d'accouplement enfichable (22),
**caractérisé en ce qu'**une unité de centrage (13) est prévue sur le dispositif de levage (12), laquelle centre la position relative de la première pièce d'accouplement enfichable (11) dans la position de repos (R), le centrage étant libéré après l'opération d'accouplement dans la position d'accouplement (K) de la première pièce d'accouplement enfichable (11) dans la deuxième pièce d'accouplement enfichable (22), l'unité de centrage (13) comprenant des ressorts de guidage qui, dans la position d'accouplement (K), soutiennent la première pièce d'accouplement enfichable (11) dans sa position, et deux broches de centrage (131) coniques étant prévues pour le centrage sur l'unité de centrage (13), lesquelles broches, dans la position de repos (R) de la première pièce d'accouplement enfichable (11), s'engagent dans des alésages de centrage (132) associés .

2. Accouplement par sellette selon la revendication 1, **caractérisé en ce que** l'unité de centrage (13) est munie de moyens de réglage pour l'alignement exact de la position relative de la première pièce d'accouplement enfichable (11) dans les directions x et y, l'axe (Z) du pivot d'attelage définissant la direction z.

3. Accouplement par sellette selon l'une des revendications précédentes, **caractérisé en ce que** le dispositif de levage (12) avec l'unité de centrage (13) est monté sur la sellette (1) en étant flottant contre une sollicitation par des ressorts (14), une rampe inclinée (16) étant prévue sur le dispositif de levage (12) avec l'unité de centrage (13), laquelle rampe inclinée (16) interagit, pendant l'opération d'accouplement, avec la face inférieure (23) du pivot d'attelage (2) de telle sorte que le dispositif de levage (12) avec l'unité de centrage (13) est poussé vers le bas contre la sollicitation des ressorts.

4. Accouplement par sellette selon l'une des revendications précédentes, **caractérisé en ce que** pour la réalisation du levage, le dispositif de levage (12) est muni d'un entraînement (17) qui est activé après le verrouillage du pivot d'attelage (2) dans la sellette (1).

5. Accouplement par sellette selon l'une des revendications précédentes, **caractérisé en ce que** le dispositif de levage (12) est muni d'une coupelle de levage (15) avec une ouverture (18), la première pièce d'accouplement enfichable (11) pouvant être déplacée dans la coupelle de levage (15) de la position de repos (R) rétractée à la position d'accouplement (K) accouplée à la deuxième pièce d'accouplement enfichable (22) et saillante à travers l'ouverture (18).

6. Accouplement par sellette selon la revendication 5, **caractérisé en ce que** l'ouverture (18) est recouverte par un ou deux éléments de recouvrement pivotants en position de recouvrement, les éléments de recouvrement étant sollicités par ressort en position de recouvrement et étant ouverts, à rencontre de la force de ressort, par le pivot d'attelage pendant l'opération d'accouplement.

7. Procédé d'accouplement d'un accouplement par sellette composée d'une sellette (1) sur un tracteur routier (10) et d'un pivot d'attelage (2) sur une semi-remorque (20), dans lequel le pivot d'attelage (2) est mis en prise avec la sellette (1) et des conduites électriques et pneumatiques (31, 32) sont raccordées au moyen d'un accouplement enfichable, l'accouplement enfichable étant muni d'une première pièce d'accouplement enfichable (11) sur la sellette (1) et d'une deuxième pièce d'accouplement enfichable (22) dans un alésage intérieur (21) du pivot d'attelage (2) orienté de façon coaxiale à l'axe (Z) du pivot d'attelage, lesquelles pièces sont conçues avec une symétrie de rotation, peuvent être insérées l'une dans l'autre et peuvent tourner l'une par rapport à l'autre autour de l'axe (Z) du pivot d'attelage, et la première pièce d'accouplement enfichable (11) sur la sellette (1) étant déplacée pendant l'accouplement d'une position de repos (R) désaccouplée et rétractée à une position d'accouplement (K) saillante et accouplée dans la deuxième pièce d'accouplement enfichable (22), **caractérisé par** les étapes consistant à
- maintenir centrée la première pièce d'accouplement enfichable (11) dans la position de repos (R) désaccouplée et rétractée,
- libérer le centrage de la première pièce d'accouplement enfichable (11) pendant le déplacement de la première pièce d'accouplement enfichable (11) dans la position d'accouplement (K) saillante et accouplée, la première pièce d'accouplement enfichable (11) étant montée flottante dans la position d'accouplement (K) saillante et accouplée, une surface de contact associée à la première pièce d'accouplement enfichable (11) étant pressée de manière élastique contre la face inférieure (23) du pivot d'attelage (2).

8. Procédé selon la revendication 7, **caractérisé en ce que** lors l'opération d'accouplement, la face inférieure (23) du pivot d'attelage (2) entre tout d'abord en contact avec une rampe inclinée (16) de la surface d'appui associée à la première pièce d'accouplement enfichable (11) et, au fur et à mesure que le tracteur routier (10) continue de passer sous la remorque de semi-remorque (20), la précontrainte du ressort et, avec elle, la pression d'appui de la surface d'appui contre la face inférieure (23) du pivot d'attelage (2) se mettent en place

9. Procédé selon la revendication 8, **caractérisé en ce qu'**après le verrouillage mécanique du pivot d'attelage (2) dans la sellette (1), la première pièce d'accouplement enfichable (11) est déplacée dans la position d'accouplement saillante et ainsi les conduites électriques et pneumatiques (31, 32) sont raccordées entre le tracteur routier (10) et la semi-remorque (20).

10. Procédé selon la revendication 9, **caractérisé en ce que** pendant l'opération d'accouplement, le déplacement de la première pièce d'accouplement enfichable (11) dans la position d'accouplement (K) accouplée et saillante est déclenché après le verrouillage mécanique du pivot d'attelage (2) dans la sellette (1).

11. Procédé selon la revendication 7, 8, 9 ou 10, **caractérisé en ce qu'**une ouverture (18) pour le passage de la première pièce d'accouplement enfichable mobile (11) est recouverte, à l'état désaccouplé, d'un élément de recouvrement, l'élément de recouvrement étant ouvert par le pivot d'attelage (2) à rencontre de la force de ressort pendant l'opération d'accouplement.
